# EUROPÄISCHE PATENTANMELDUNG

(11) **EP 1 867 559 A2**
(43) Veröffentlichungstag der Anmeldung: **19.12.2007**
(21) Anmeldenummer: 07009578.1
(22) Anmeldetag: 12.05.2007
(51) Int. Cl.: B62D 25/04, B62D 29/00

(54) **Aufprallschutzverstärkungsteil**

(30) Priorität: 14.06.2006 DE 102006027546
(71) Anmelder: Volkswagen Aktiengesellschaft, 38436 Wolfsburg (DE)
(72) Erfinder: Henkelmann, Hartmut, 38518 Gifhorn (DE)

(57) **Zusammenfassung**

Die Erfindung betrifft ein Aufprallschutzverstärkungsteil (1), dessen zumindest eine Außenfläche an die Kontur der Fläche wenigstens eines Karosserieteils derart angepasst ist, dass sie im komplementär gestalteten Bereich an das Karosserieteil dieses flächig berührend anlegbar und mit dem Karosserieteil fest verbindbar ist.

Es ist vorgesehen, dass das Aufprallschutzverstärkungsteil (1) aus einem Faser-KunststoffVerbund besteht.

Die Erfindung betrifft ferner ein Verfahren zur Herstellung eines Aufprallschutzverstärkungsteils, wonach dieses im Injektionsverfahren hergestellt wird.

## Beschreibung

Die Erfindung betrifft ein Aufprallschutzverstärkungsteil, dessen zumindest eine Außenfläche an die Kontur der Fläche wenigstens eines Karosserieteils derart angepasst ist, dass sie im komplementär gestalteten Bereich an das Karosserieteil dieses flächig berührend anlegbar und mit dem Karosserieteil fest verbindbar ist.

Es ist bekannt, dass im Kraftfahrzeugsektor zunehmend erhöhte Anforderungen an die Fahrgastsicherheit und damit an Aufprallschutzvorkehrungen gestellt werden. Derartige Aufprallschutzvorkehrungen können aktiv durchgeführt werden, zum Beispiel durch die Anordnung eines Airbags, oder auch passiv, zum Beispiel durch die Erhöhung der Knicksteifigkeit beziehungsweise der Festigkeit tragender Karosserieelemente. Zur Erhöhung der Knicksteifigkeit beziehungsweise der Festigkeit der Karosserieelemente werden diese bevorzugt an einigen Stellen mit verdickter Wandstärke und/oder mit einem höheren Flächenmoment ausgeführt. Derart ausgestaltete serienmäßige Karosserieelemente erfüllen damit die normalen Anforderungen an den passiven Aufprallschutz.

In einigen Wirtschaftsgebieten beziehungsweise Wirtschaftsländern bestehen darüber hinaus allerdings erhöhte Anforderungen an den Aufprallschutz. Serienmäßig erzeugte Karosserieelemente erfüllen diese erhöhten Auflagen nicht mehr. Um weiterhin eine kostengünstige Fertigung der Karosserieteile zu ermöglichen hat es sich daher durchgesetzt, die serienmäßig produzierten Karosserieteile mit zusätzlichen Verstärkungselementen zu versehen, die zusammen mit den Karosserieelementen eine derartigen Knicksteifigkeit beziehungsweise Festigkeit aufweisen, dass die Anforderungen an die erhöhten Sicherheitsbestimmungen in diesen speziellen Wirtschaftsgebieten erfüllt werden. Zu diesem Zweck wird zum Beispiel in B-Säulen eines Kraftfahrzeuges ein BTR-Kern, also ein Material aus einem hochfesten formgehärteten Stahl, eingesetzt. Der Einsatz eines solchen Stahlkernes hat allerdings den Nachteil eines hohen Gewichtes und hoher Herstellungskosten bei einer Produktion der B-Säulen mit geringeren Stückzahlen aufgrund der relativ hohen Anlagenkosten.

Des Weiteren ist es üblich, zur Verstärkung von Karosserieelementen zum Beispiel Verstärkungsbleche einzusetzen. Es zeigt das Dokument DE 101 62 741 eine derartige mit Verstärkungsblechen versehene B-Säule. Um die gewünschten Festigkeits- bzw. Steifigkeitswerte zu erreichen ist es allerdings erforderlich, das jeweilige Verstärkungsblech mittels Schweißen mit dem Karosserieteil zu verbinden.

Außerdem ist es bekannt, Glasfaser-Thermoplast im Bereich von stoßabsorbierenden Bauteilen an Kraftfahrzeugen zu verwenden. So wird zum Beispiel ein Stoßfängerquerträger aus einem Glasfaser-Thermoplast gefertigt. Bei dieser Ausführungsform verbindet sich der aus Glasfaser-Thermoplast hergestellte Stoßfängerquerträger mit dem an ihm anschließenden, den Stoßfänger ausbildenden Kunststoff. In dieser Ausführungsform erfüllt das Glasfaser-Thermoplastteil alleine nur die Funktion der Befestigung eines nicht zur Karosse gehörenden Aufprallschutzteils. Eine Abstützung der Karosserie beziehungsweise die Aufnahme von statischen Kräften wird durch diesen aus Glasfaser-Thermoplast hergestellten Stoßfängerquerträger nicht realisiert.

Der Erfindung liegt daher die Aufgabe zugrunde, ein Verfahren zur Herstellung eines Aufprallschutzverstärkungsteils und das Aufprallschutzverstärkungsteil selbst zur Verfügung zu stellen, welches einfach und kostengünstig zu fertigen ist und bei geringem Gewicht eine ausreichende Verstärkung eines Karosserieteiles im Falle eines Aufpralls herstellt und geeignet ist, statische Kräfte aufzunehmen.

Diese Aufgabe wird erfindungsgemäß durch die in den Ansprüchen 1 und 16 genannten Merkmale gelöst. Vorteilhafte Ausgestaltungen sind in den jeweiligen Unteransprüchen angegeben.

Es wird ein Aufprallschutzverstärkungsteil zur Verfügung gestellt, dessen zumindest eine Außenfläche an die Kontur der Fläche wenigstens eines Karosserieteils derart angepasst ist, dass sie im komplementär gestalteten Bereich an das Karosserieteil dieses flächig berührend anlegbar und mit dem Karosserieteil fest verbindbar ist, wobei das Aufprallschutzverstärkungsteil aus einem Faser-Kunststoff-Verbund besteht.

Das heißt, dass das erfindungsgemäße Aufprallschutzverstärkungsteil derart ausgestaltet ist, dass es mit einem Karosserieblechteil, wie z. B. einer Türsäule, fest verbindbar ist. Dabei ist das Aufprallschutzverstärkungsteil derart ausgestaltet, dass zumindest eine seiner größeren Außenflächen eine Fläche eines Karosserieteils abdeckend an diesem gelagert ist. Durch die feste Verbindung zwischen Karosserieteil und Aufprallschutzverstärkungsteil ergibt sich eine Erhöhung der Knicksteifigkeit und der Festigkeit der beiden miteinander verbundenen Teile und damit auch eine Verstärkung der Karosserie im Bereich des Karosserieteiles zum Schutz der Fahrzeuginsassen bei einem Aufprall. Der Einsatz des Faser- Kunststoff-Verbundes bewirkt ein nur geringes Gewicht des Aufprallschutzverstärkungsteiles. Ein weiterer Vorteil dieser Ausführungsform besteht darin, dass sich ein aus Faser-Kunststoff-Verbund bestehendes Aufprallschutzverstärkungsteil mit relativ geringen Fixkosten herstellen lässt.

Insbesondere in der, Konstellation, in der das Karosserieteil ein tragendes Teil ist, bewirkt die Befestigung des Aufprallschutzverstärkungsteils außerdem eine Erhöhung der statischen Tragfähigkeit des Karosserieteils.

In einer vorteilhaften Ausgestaltung ist vorgesehen, dass das Aufprallschutzverstärkungsteil formschlüssig mit dem Karosserieteil verbindbar ist. Das heißt, dass die Form des Aufprallschutzverstärkungsteiles derart an die Form eines oder mehrerer Karosserieteile angepasst ist, dass es an einem oder mehreren Karosserieteilen anliegt und dort aufgrund bestimmter Ausführung von Konturen und Formelementen des Karosserieteiles und damit auch des Aufprallschutzverstärkungsteiles an diesem festgehalten wird. Eine derartige Ausgestaltung ergibt sich zum Beispiel beim Einsatz eines erfindungsgemäßen Aufprallschutzverstärkungsteiles als Kern innerhalb einer im Wesentlichen hohl ausgeführten B-Säule eines Kraftfahrzeuges. In dieser Ausgestaltung wird das Aufprallschutzverstärkungsteil nur aufgrund seiner Form an einer bestimmten Position innerhalb der B-Säule fixiert.

Des Weiteren ist in einer bevorzugten Ausführungsform vorgesehen, dass das erfindungsgemäße Aufprallschutzverstärkungsteil zusätzlich zu der formschlüssigen Verbindung stoffschlüssig mit einem oder mehreren Karosserieteilen verbindbar ist. In dieser Ausführungsform wird das Aufprallschutzverstärkungsteil also nicht nur aufgrund eines Formschlusses am oder im Karosserieteil fixiert, sondern es besteht zusätzlich eine stoffschlüssige Verbindung zwischen Aufprallschutzverstärkungsteil und Karosserieteil. Eine solche stoffschlüssige Verbindung wird üblicherweise durch eine Klebung hergestellt. Zu diesem Zweck weist das erfindungemäße Aufprallschutzverstärkungsteil eine die Klebung begünstigende Oberfläche auf.

In vorteilhafter Weise ist das Aufprallschutzverstärkungsteil derart geformt, dass es zumindest teilweise an die Innenfläche eines Innenblechs oder alternativ dazu an die Innenfläche eines Außenblechs einer B-Säule eines Kraftfahrzeugs angepasst ist. Wie oben schon erwähnt, bietet sich vorteilhafter Weise der Einsatz des Aufprallschutzverstärkungsteil im Innenraum einer B-Säule eines Kraftfahrzeuges an. Aus Gründen der Platzersparnis und der Steifigkeitserhöhung wird daher das Aufprallschutzverstärkungsteil direkt an der Innenfläche eines Innenblechs/ Außenblechs einer B-Säule befestigt. Bei einem Aufprall auf die B-Säule verformt sich diese nur so weit, wie es ihre eigene Steifigkeit und Festigkeit sowie die Steifigkeit und Festigkeit des in ihrem Inneren befestigen Aufprallschutzverstärkungsteiles zulässt.

In einer speziellen Ausführungsform ist vorgesehen, dass das Aufprallschutzverstärkungsteil im Wesentlichen eine Schicht ist, die der Form der Anlagefläche des Karosserieteiles angepasst ist. Bei einem Einsatz des Aufprallschutzverstärkungsteiles zum Beispiel in einer B-Säule eines Kraftfahrzeuges bedeutet dies, dass das erfindungsgemäße Aufprallschutzverstärkungsteil die selbe Profilform wie das im Wesentlichen konkav gestaltete Innenblech bzw. Außenblech der B-Säule aufweist.

In einer alternativen Ausführungsform kann daneben auch vorgesehen sein, dass das Aufprallschutzverstärkungsteil ein hohles Bauteil ist, bei dem mindestens eine seiner Außenseiten an die Anlagefläche des Karosserieteiles angepasst ist. Die äußere Form des Aufprallschutzverstärkungsteiles ist dabei derart ausgeführt, dass es sich an zumindest eine Anlagefläche zumindest eines angrenzenden Karosserieteils anlegt.

Alternativ dazu kann auch vorgesehen sein, dass das Aufprallschutzverstärkungsteil als Vollmaterial ausgeführt ist. Dies Ausführungsform bewirkt eine maximale Knicksteifigkeit des Aufprallschutzverstärkungsteiles und damit auch eine maximale Knicksteifigkeit einer mit dem Aufprallschutzverstärkungsteil versehenen B-Säule.

In einer speziellen Ausgestaltung ist vorgesehen, dass das Aufprallschutzverstärkungsteil wenigstens eine Einrichtung zur mechanischen Befestigung von weiteren Bauteilen aufweist. Dies ist insbesondere dann vorteilhaft, wenn das Aufprallschutzverstärkungsteil in einer B-Säule eines Kraftfahrzeuges Anwendung findet. In diesem Falle können zum Beispiel Gewindebohrungen im Aufprallschutzverstärkungsteil vorgesehen sein, in denen Scharnierelemente mittels Befestigungsmitteln wie z. B. Schrauben durch das Außenblech oder Innenblech einer B-Säule hindurch an dem Aufprallschutzverstärkungsteil befestigt werden können. Es fallen dadurch zusätzliche Versteifungselemente in Blechform weg. Das Aufprallschutzverstärkungsteil erfüllt in dieser Ausführungsform im Wesentlichen drei Funktionen, nämlich die Aufnahme durch das Scharnier in die B-Säule und damit auch in das Aufprallschutzverstärkungsteil eingeleiteter Kräfte, die Versteifung des B-Säulenblechs gegen aufgrund der Scharnierkräfte eingeleiteten Verformungen, sowie außerdem die Verstärkung der B-Säule zum Schutz gegen einen Aufprall.

Vorteilhafterweise ist des Weiteren vorgesehen, dass das Aufprallschutzverstärkungsteil wenigstens einen Bereich aufweist, in dem es im Vergleich zum übrigen Bauteil erhöhte Festigkeitseigenschaften aufweist. Diese Bereiche mit erhöhten Festigkeitseigenschaften können zum Beispiel an den Stellen angeordnet sein, an denen Scharniere befestigt werden. Des weiteren können derartige Bereiche aber auch dort angeordnet sein, an denen mit einer Maximalbelastung im Falle eines Aufpralls gerechnet wird.

Vorteilhafterweise wird dieser Bereich mit erhöhten Festigkeitseigenschaften durch die Einbringung wenigstens eines zusätzlichen Textilelementes in den Faser-Kunststoff-Verbund hergestellt. Dieses in Textilelement, welches vorzugsweise in Rechteckform vorliegt, wird an das Aufprallschutzverstärkungsteil an- oder einlaminiert. Die Rechteckform des Textilelementes bewirkt eine Optimierung des Textilzuschnittes.

Vorteilhafterweise weist das erfindungsgemäße Aufprallschutzverstärkungsteil in seinem Längsrichtungsverlauf unterschiedliche Flächenmomente auf. Um eine Gewichtsminimierung zu erreichen und um besser die Festigkeitsanforderungen in bestimmten Bereichen zu erfüllen, kann es in bestimmten Bereichen zum Beispiel dicker, also mit einer größeren Wandstärke, oder auch mit größeren Abständen der einzelnen Außenflächen zueinander im Vergleich zu anderen Abschnitten des Aufprallschutzverstärkungsteils gestaltet sein.

Um hohe Festigkeitseigenschaften bei geringem Gewicht zu gewährleisten ist des Weiteren vorgesehen, dass die Fasern des Aufprallschutzverstärkungsteiles in den Hauptnormalspannungsrichtungen ausgerichtet sind. Das bedeutet, dass die Fasern senkrecht zu der Richtung ausgerichtet sind, aus der ein möglicher Aufprall auf das mit dem Aufprallschutzverstärkungsteil versehene Karosserieteil zu erwarten ist.

Vorteilhafterweise besteht der Faser-Kunststoff-Verbund des erfindungsgemäßen Aufprallschutzverstärkungsteiles aus wenigstens einem textilen Halbzeug und einer petrochemischen Matrix. Es kann das textile Halbzeug nur ein biaxiales Glasgewebe mit unterschiedlichen Faseranteilen in Kett- und Schussrichtung aufweisen. Die petrochemische Matrix kann ein duromeres Epoxidharz sein.

Erfindungsgemäß wird das Aufprallschutzverstärkungsteil im Injektionsverfahren hergestellt. Das bedeutet, dass ein textiles Halbzeug in ein Werkzeug eingelegt wird, in welches die petrochemische Matrix injiziert wird. Dieses Injektionsverfahren bietet die Möglichkeit einer schnellen Fertigung bei einem hohen Qualitätsstandard.

In einer speziellen Ausgestaltung des Verfahrens wird in einem Presswerkzeug zunächst ein Vorformling aus einem textilem Halbzeug erzeugt und dieser Vorformling anschließend in einem Injektionsguss-Werkzeug mit der petrochemischen Matrix verbunden. Dieser zusätzliche Verfahrenschritt hat den Vorteil, dass eine Grundform des herzustellenden Aufprallschutzverstärkungsteiles sowie zumindest dessen grobe Abmaße bereits hergestellt sind, bevor der Vorformling im Injektionsguss-Werkzeug mit der petrochemischen Matrix verbunden wird. Die Formgebung des Vorformlings im Presswerkzeug kann dabei unter Temperaturerhöhung erfolgen. Durch die endformnahe Ausgestaltung des Vorformlings muss keine überschüssige Fläche an Gewebe im Injektionsguss-Werkzeug mit der petrochemischen Matrix verbunden werden. Dies bewirkt eine Senkung von Produktionszeit, Produktionskosten und Materialkosten. Nach der Entnahme des Werkstückes aus dem Injektionsguss-Werkzeug wird dieses unter Wärmeeinwirkung ausgehärtet und anschließend mechanisch bearbeitet.

Vorteilhafterweise ist das erfindungsgemäße Injektionsverfahren ein Resin-Transfer-Moulding-Verfahren (RTM).

In einer speziellen Ausführungsform des Verfahrens ist vorgesehen, dass der Faser-Kunststoff-Verbund für das Aufprallschutzverstärkungsteil direkt in ein Karosserieteil einlaminiert wird und das Karosserieteil somit ein Werkzeugbestandteil ist. Bei dieser Ausführungsform bildet somit das Karosserieteil eine Injektionsguss-Werkzeughälfte, in der das textile Halbzeug eingelegt und anschließend mit der petrochemischen Matrix verbunden wird. Das textile Halbzeug und die petrochemische Matrix härten dann direkt im Karosserieteil aus. In dieser Ausgestaltung des Verfahrens kann dabei vorgesehen sein, dass sich das zu erzeugende Aufprallschutzverstärkungsteil durch die Einlaminierung in das Karosserieteil gleich mit diesem fest verbindet, oder auch, dass nach Aushärtung des Gewebes zum Aufprallschutzverstärkungsteil dieses wieder aus dem als Form dienenden Karosserieteil entnommen werden kann und somit später mit diesem oder auch einem anderen gleichartigen Karosserieteil mechanisch verbunden oder formschlüssig in diesem gehalten und/oder eingeklebt werden kann.

Die Erfindung wird nachfolgend in Ausführungsbeispielen anhand der zugehörigen Zeichnungen erläutert. Es zeigen:
- Figur 1: ein erfindungsgemäßes Aufprallschutzverstärkungsteil;
- Figur 2: ein Aufprallschutzverstärkungsteil in einer Explosionsdarstellung einer BSäule eines Kraftfahrzeuges und
- Figur 3: eine schematische Darstellung des Verfahrens zur Herstellung des erfindungsgemäßen Aufprallschutzverstärkungsteils.

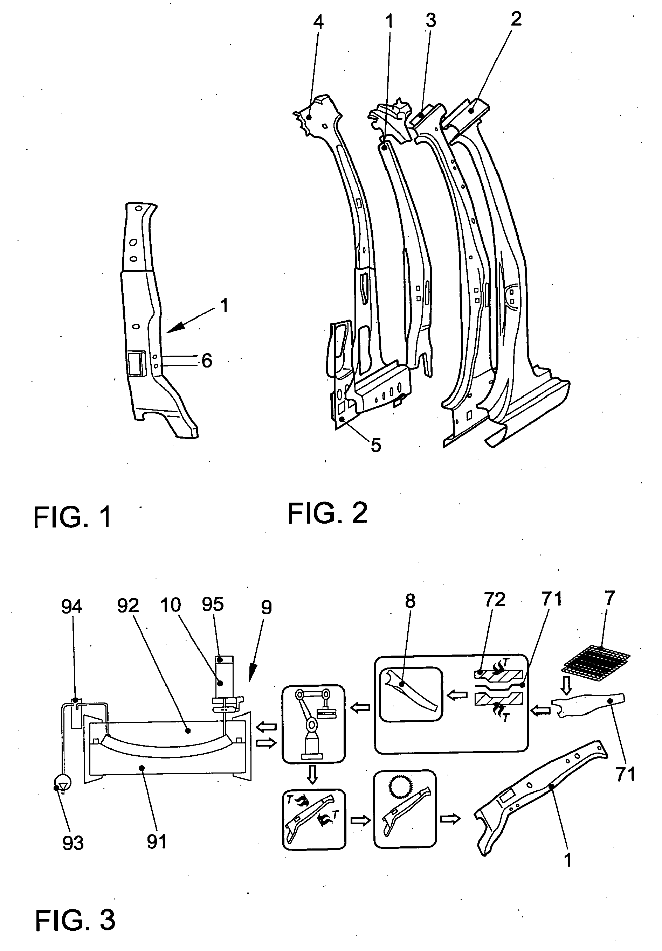

Figur 1 ist das erfindungsgemäße Aufprallschutzverstärkungsteil 1 dargestellt. Im Aufprallschutzverstärkungsteil 1 sind die Einrichtungen zur mechanischen Befestigung eines Anbauteils 6 angedeutet.

In Figur 2 ist ersichtlich, dass eine Oberfläche des Aufprallschutzverstärkungsteils 1 an die Innenfläche eines Innenblechs einer B-Säule 3 derart angepasst ist, dass die Oberfläche des Aufprallschutzverstärkungsteils 1 an dieser Innenfläche des Innenblechs der B-Säule 3 in allen einzelnen Konturen der Fläche anliegt.

Das Aufprallschutzverstärkungsteil 1 lässt sich derart in einer B-Säule eines Kraftfahrzeuges einsetzen, dass es zwischen einem B-Säulenseitenteil innen hinten 4 und einem Innen blech der B-Säule 3 angeordnet ist. Ein Außenblech der B-Säule 2 deckt das Innenblech der B-Säule 3 ab. Im Außenblech 2 sowie im Innenblech der B-Säule 3 sind Öffnungen angedeutet, die bei eingesetztem Aufprallschutzverstärkungsteil 1 in die B-Säule mit der Position der Einrichtungen zur mechanischen Befestigung eines Anbauteiles 6 übereinstimmen. Somit ist es möglich, bei eingesetztem Aufprallschutzverstärkungsteil 1 Befestigungselemente, zum Beispiel zur Befestigung von Scharnieren, durch die Öffnungen im Außenblech der B-Säule 2 und durch das Innenblech der B-Säule 3 hindurchzuführen und im Aufprallschutzverstärkungsteil 1 zu verankern. Üblicherweise werden die in Figur 2 dargestellten Blechteile, nämlich das Außenblech der B-Säule 2, das Innen blech der B-Säule 3, das B-Säulenseitenteil innen hinten 4 sowie ein Ansatzstück für die Gurtautomatik 5 und ein Dachquerträgerverstärkungsteil 11 miteinander verschweißt. Vor der Verschweißung dieser genannten Bauteile wird das Aufprallschutzverstärkungsteil 1 zwischen ihnen positioniert.

Durch die an die Form des Innenblechs der B-Säule 3 und des B-Säulenseitenteils innen hinten 4 angepasste Form des Aufprallschutzverstärkungsteils 1 ergibt sich dessen formschlüssige Fixierung und Positionierung zwischen diesen genannten Bauteilen 3, 4. Das heißt, dass durch die Ausbildung bestimmter Formelemente am Aufprallschutzverstärkungsteil 1 dieses derart. zwischen den genannten Bauteilen 3, 4 eingeklemmt ist, dass ihm im Wesentlichen alle Freiheitsgrade genommen sind. Dabei umfasst die Erfindung auch derartige Ausgestaltungen, bei denen kein Innenblech der B-Säule 3 vorhanden ist, so dass das Aufprallschutzverstärkungsteil 1 mit zumindest einer seiner Oberflächen direkt an der Innenfläche des Außenblechs der B-Säule 2 anliegt.

In vorteilhafter Weise sind zwischen den Anlageflächen am Aufprallschutzverstärkungsteil 1 und den Flächen am Außenblech der B-Säule 2 beziehungsweise am Innenblech der B-Säule 3 und an den Anlageflächen des B-Säulenseitenteiles innen hinten 4 Klebeflächen vorgesehen, um eine festere Fixierung des Aufprallschutzverstärkungsteils 1 an den genannten Bauteilen sowie ein Vibrationsschutz des Aufprallschutzverstärkungsteils 1 zu realisieren. Bei Ausführung einer ausreichend starken Klebung kann das Aufprallschutzverstärkungsteil 1 ebenfalls eine tragende Funktion in der Karosse neben der B-Säule einnehmen.

Scharnierelemente (nicht dargestellt) lassen sich mit Befestigungsmitteln wie oben beschrieben in den Einrichtungen zur mechanischen Befestigung eines Anbauteiles 6 durch das Außenblech der B-Säule 2 und das Innenblech der B-Säule 3 am Aufprallschutzverstärkungsteil 1 fixieren. Das Aufprallschutzverstärkungsteil 1 erfüllt damit die Funktion der Stabilisierung der Oberfläche der Bleche der B-Säule 3, 4 bei an ihnen befestigten Scharnierelementen und gleichzeitig ebenfalls die Aufnahme der durch die Scharnierelemente eingeleiteten Kräfte in die B-Säule. Des Weiteren erhöht das Aufprallschutzverstärkungsteil 1 die Knicksteifigkeit der gesamten B-Säule. Die Erfindung erstreckt sich auch auf derartige Ausführungsformen, bei denen keine Einrichtung zur mechanischen Befestigung eines Anbauteils im Aufprallschutzverstärkungsteil 1 angeordnet sind. In dieser Ausführungsform gewährleistet das Aufprallschutzverstärkungsteil 1 nur die Stabilisierung der B-Säule sowie die Abstützung der Flächen der B-Säule, an denen Anbauteile befestigt sind.

In Figur 3 ist schematisch ein Verfahren zur Herstellung des erfindungsgemäßen Aufprallschutzverstärkungsteiles 1 dargestellt. In diesem Verfahren wird als erstes ein textiles Halbzeug 7 zu einem drapierten Halbzeug 71 vorgeformt. Dieses drapierte Halbzeug 71 wird in ein Presswerkzeug 72 drapiert und dort fixiert. Unter Wärmeeinwirkung wird in diesem Presswerkzeug 72 das drapierten Halbzeug 71 zu einem Vorformling 8 vorgeformt. Dieser Vorformling 8 weist im Wesentlichen bereits die grobe Endform und die Endabmaße des zu fertigenden Aufprallschutzverstärkungsteiles 1 auf. Anschließend wird der Vorformling 8 manuell oder auch mittels eines Handhabungsgerätes in ein Injektionsguss-Werkzeug 9 eingelegt. Dieses Injektionsguss-Werkzeug 9 umfasst eine untere Werkzeughälfte 91, eine obere Werkzeughälfte 92, gegebenenfalls eine Vakuumerzeugungseinrichtung 93, eine Harzfalle 94, sowie einen Harzbehälter 95, in dem eine petrochemische Matrix 10 aufbewahrt ist. Nach Einlegen des Vorformlings 8 zwischen die beiden Werkzeughälften 91, 92 wird mittels einer Druckdifferenz die im Harzbehälter 95 befindliche petrochemische Matrix in den Hohlraum zwischen den beiden Werkzeughälften 91, 92, in dem sich bereits der Vorformling 8 befindet, transportiert. Auf diesem Wege werden die Fasern des Vorformlings 8 mit der petrochemischen Matrix 10 verbunden. Danach wird der derartig behandelte Vorformling 8 aus dem Injektionsguss-Werkzeug 9 herausgenommen und unter Wärmezufuhr ausgehärtet. Anschließend erfolgt, wenn erforderlich, eine mechanische Nachbearbeitung, welche die Endform und Endabmaße des zu fertigenden Aufprallschutzverstärkungsteiles 1 herstellt.

### Bezugszeichenliste

- 1: Aufprallschutzverstärkungsteil
- 2: Außenblech B-Säule
- 3: Innenblech B-Säule
- 4: B-Säulenseitenteil innen hinten
- 5: Ansatzstück für Gurtautomat
- 6: Einrichtung zur mechanischen Befestigung eines Anbauteils
- 7: textiles Halbzeug
- 71: drapiertes Halbzeug
- 72: Presswerkzeug
- 8: Vorformling
- 9: Injektionsguss-Werkzeug
- 91: untere Werkzeughälfte
- 92: obere Werkzeughälfte
- 93: Vakuumerzeugungseinrichtung
- 94: Harzfalle
- 95: Harzbehälter
- 10: petrochemische Matrix
- 11: Dachquerträgerverstärkungsteil

## Patentansprüche

1. Aufprallschutzverstärkungsteil (1), dessen zumindest eine Außenfläche an die Kontur der Fläche wenigstens eines Karosserieteils derart angepasst ist, dass sie im komplementär gestalteten Bereich an das Karosserieteil dieses flächig berührend anlegbar und mit dem Karosserieteil fest verbindbar ist,
**dadurch gekennzeichnet, dass**
das Aufprallschutzverstärkungsteil (1) aus einem Faser-Kunststoff-Verbund besteht.

2. Aufprallschutzverstärkungsteil nach Anspruch 1,
**dadurch gekennzeichnet, dass**
es formschlüssig mit dem Fahrzeugkarosserieteil fest verbindbar ist.

3. Aufprallschutzverstärkungsteil nach einem der vorhergehenden Ansprüche,
**dadurch gekennzeichnet, dass**
es stoffschlüssig mit dem Fahrzeugkarosserieteil fest verbindbar ist.

4. Aufprallschutzverstärkungsteil nach einem der vorhergehenden Ansprüche,
**dadurch gekennzeichnet, dass**
es derart geformt ist, dass es zumindest teilweise an die Innenfläche eines Innenblechs einer B-Säule (3) angepasst ist.

5. Aufprallschutzverstärkungsteil nach einem der Ansprüche 1 bis 3,
**dadurch gekennzeichnet, dass**
es derart geformt ist, dass es zumindest teilweise an die Innenfläche eines Außenblechs einer B-Säule (2) angepasst ist.

6. Aufprallschutzverstärkungsteil nach einem der vorhergehenden Ansprüche,
**dadurch gekennzeichnet, dass**
es eine Schicht ist, die der Form einer Anlagefläche des Karosserieteils angepasst ist.

7. Aufprallschutzverstärkungsteil nach einem der Ansprüche 1 bis 5,
**dadurch gekennzeichnet, dass**
es als hohles Bauteil ausgeführt ist, wobei mindestens eine seiner Außenseiten an die Form einer Anlagefläche des Karosserieteils angepasst ist.

8. Aufprallschutzverstärkungsteil nach einem der Ansprüche 1 bis 5,
**dadurch gekennzeichnet, dass**
es als Vollmaterial ausgeführt ist, wobei mindestens eine seiner Außenseiten an die Form einer Anlagefläche des Karosserieteils angepasst ist.

9. Aufprallschutzverstärkungsteil nach einem der vorhergehenden Ansprüche,
**dadurch gekennzeichnet, dass**
es wenigstens eine Einrichtung zur mechanischen Befestigung von Bauteilen (6) aufweist.

10. Aufprallschutzverstärkungsteil nach einem der vorhergehenden Ansprüche,
**dadurch gekennzeichnet, dass**
es wenigstens einen Bereich mit im Vergleich zum übrigen Bauteil erhöhten Festigkeitseigenschaften aufweist.

11. Aufprallschutzverstärkungsteil nach Anspruch 10,
**dadurch gekennzeichnet, dass**
der Bereich mit erhöhten Festigkeitseigenschaften durch die Einbringung wenigstens eines, zusätzlichen Textil-Elements hergestellt ist.

12. Aufprallschutzverstärkungsteil nach einem der vorhergehenden Ansprüche,
**dadurch gekennzeichnet, dass**
es in seinem Längsrichtungsverlauf unterschiedliche Flächenträgheitsmomente aufweist.

13. Aufprallschutzverstärkungsteil nach einem der vorhergehenden Ansprüche,
**dadurch gekennzeichnet, dass**
dessen Fasern in Hauptnormalspannungsrichtung ausgerichtet sind.

14. Aufprallschutzverstärkungsteil nach einem der vorhergehenden Ansprüche,
**dadurch gekennzeichnet, dass**
der Faser-Kunststoff-Verbund aus wenigstens einem textilen Halbzeug (7) und einer petrochemischen Matrix (10) aufgebaut ist.

15. Aufprallschutzverstärkungsteil nach Anspruch 14,
**dadurch gekennzeichnet, dass**
das textile Halbzeug (7) nur ein biaxiales Glasgewebe mit unterschiedlichen Faseranteilen in Kett- und Schussrichtung aufweist und dass die petrochemische Matrix (10) die eines duromeren Epoxidharzes ist.

16. Verfahren zur Herstellung eines Aufprallschutzverstärkungsteils gemäß Anspruch 1,
**dadurch gekennzeichnet, dass**
es im Injektionsverfahren hergestellt wird.

17. Verfahren zur Herstellung eines Aufprallschutzverstärkungsteils nach Anspruch 16,
**dadurch gekennzeichnet, dass**
in einem Presswerkzeug (72) zunächst ein Vorformling (8) aus einem textilen Halbzeug erzeugt wird und dieser Vorformling (8) anschließend in einem Injektionsguss-Werkzeug (9) mit der petrochemischen Matrix (10) verbunden wird.

18. Verfahren zur Herstellung eines Aufprallschutzverstärkungsteils nach einem der Ansprüche 16 und 17,
**dadurch gekennzeichnet, dass**
das Injektionsverfahren ein Resin-Transfer-Moulding-Verfahren ist.

19. Verfahren zur Herstellung eines Aufprallschutzverstärkungsteils nach einem der Ansprüche 16 bis 18,
**dadurch gekennzeichnet, dass**
der Faser-Kunststoff-Verbund für das Aufprallschutzverstärkungsteil direkt in ein Karosserieteil einlaminiert wird und das Karosserieteil somit ein Werkzeugbestandteil (91, 92) ist.
